(19) Europäisches Patentamt
European Patent Office
Office européen des brevets

(11) Numéro de publication : 0 090 677 B1

(12) **FASCICULE DE BREVET EUROPÉEN**

(45) Date de publication du fascicule du brevet : 21.11.85

(51) Int. Cl.⁴ : C 23 G 5/036, C 09 K 3/18, C 03 C 23/00

(21) Numéro de dépôt : 83400293.3

(22) Date de dépôt : 11.02.83

(54) **Composition pour le démouillage des surfaces.**

(30) Priorité : 23.02.82 FR 8202923

(43) Date de publication de la demande : 05.10.83 Bulletin 83/40

(45) Mention de la délivrance du brevet : 21.11.85 Bulletin 85/47

(84) Etats contractants désignés : BE CH DE FR GB IT LI NL SE

(56) Documents cités :
FR-A- 1 515 393
FR-A- 1 541 592
FR-A- 2 281 778
US-A- 4 182 687

(73) Titulaire : ATOCHEM
12/16, allée des Vosges
F-92400 Courbevoie (FR)

(72) Inventeur : Lantz, André
Domaine de la Hêtraie
F-69390 Vernaison (FR)
Inventeur : Mathais, Henri Hameau de Saint Didier
Villa No 2 Chemin de l'Indiennerie
F-69370 Saint Didier au Mont D'Or (FR)
Inventeur : Dupuis, Gérard
34, rue Auguste Blanche
F-92800 Puteaux (FR)

(74) Mandataire : Rochet, Michel et al
ATOCHEM Département Propriété Industrielle Cédex 22
F-92091 Paris la Défense (FR)

EP 0 090 677 B1

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue St-Denis, 75001 Paris, France

**Description**

La présente invention concerne une composition permettant d'effectuer l'élimination de l'eau qui se trouve sur des surfaces mouillées.

Il est connu que l'on peut éliminer l'eau de certaines surfaces mouillées par des procédés consistant à mettre celles-ci en contact avec des liquides organiques denses non miscibles à l'eau et contenant éventuellement un agent tensio-actif dont le but est de déplacer l'eau, qui vient flotter à la surface du liquide. Le liquide organique est mis en contact avec les surfaces à traiter par exemple par pulvérisation, par application au pinceau, par aspersion ou par immersion des surfaces dans le liquide. Dans ce dernier cas qui correspond à la majorité des installations industrielles, il est utile d'agiter le bain liquide par ébullition de celui-ci, par des moyens mécaniques ou à l'aide d'ultra-sons.

Le solvant fluoré habituellement utilisé pour le déplacement de l'eau de la surface des articles, c'est-à-dire le solvant de démouillage habituellement utilisé est le trichloro-1,1,2-trifluoro-1,2,2 éthane contenant un ou plusieurs tensio-actifs. On préfère en général utiliser les agents tensio-actifs à des concentrations de l'ordre de 0,01 à 1 % en poids. L'art antérieur enseigne que le déplacement d'eau par des liquides denses contenant des agents tensio-actifs s'effectue par adsorption de l'agent tensio-actif sur les surfaces à démouiller pour les rendre non mouillables par l'eau. L'eau se rassemble ensuite sous forme de gouttelettes qui montent à la surface et forment une couche d'eau séparable.

Le brevet français 1 541 592 décrit un procédé et un dispositif de démouillage en continu qui consiste à mettre en contact les articles avec le liquide de démouillage par immersion des articles dans une zone turbulente d'un bain, à permettre à l'eau déplacée de flotter à la surface du liquide de déplacement dans une zone de repos dans le même bain et à séparer ensuite l'eau déplacée du liquide de démouillage. Le solvant de démouillage utilisé dans ce procédé a été décrit dans le brevet français 1 515 393 et est constitué de trichloro-1,1,2 trifluoroéthane contenant 0,5 à 3 % en poids d'un agent tensio-actif obtenu en neutralisant un mélange de phosphates de mono et de dialcoyle avec une amine aliphatique saturée en particulier des octylphosphates d'éthyl-2 hexylamine. Ce liquide de déplacement de l'eau ne donne cependant pas entière satisfaction et différents autres types de tensio-actifs ont été préconisés. Ainsi, le brevet français 2 040 733 décrit l'utilisation comme agents tensio-actifs de sels d'amine du type dioléate de N-oléylpropylènediamine et le brevet français 2 205 562 l'utilisation de diamides du type dioléyl-oléylamidopropylène amide. Le brevet français 2 217 045 décrit l'emploi de tensio-actifs cationiques dérivés de l'imadozoline. Les compositions contenant l'un de ces trois derniers types d'agents tensio-actifs donnent des résultats satisfaisants au séchage mais elles présentent l'inconvénient de former une émulsion quand on les mélange avec de l'eau et ces émulsions sont difficilement et très lentement séparables en deux phases. Cette caractéristique réduit considérablement leur utilité pratique en particulier dans le cas d'un procédé de séchage en continu au cours duquel la composition de démouillage est recyclée.

Une bonne composition de démouillage doit répondre en particulier aux trois critères suivants :

1) La composition doit permettre de réaliser un séchage efficace d'objets de natures différentes. Elle doit convenir aussi bien aux objets métalliques, aux surfaces en verre ou en matières réfractaires, aux pierres précieuses qu'aux matières plastiques non attaquables par ces compositions. L'élimination ou le déplacement de l'eau doivent être aussi rapides et aussi complets que possible.

2) La composition démouillante ne doit pas former d'émulsion par mise en contact avec de l'eau ou si tel n'est pas le cas l'émulsion formée doit être facilement et rapidement séparable en deux phases. Ce critère est très important car dans le cas de la formation d'une émulsion difficile à séparer en deux phases, l'élimination de la couche aqueuse au cours du procédé de séchage serait très difficile et risquerait d'entraîner une partie de la composition démouillante émulsionnée dans l'eau.

3) Afin que la composition de démouillage ne s'appauvrisse pas au cours du fonctionnement, il est très important que l'agent tensio-actif ne s'extraie pas avec l'eau ou que cette extraction reste très faible. Il faut donc que le tensio-actif ait une affinité plus grande pour le solvant halogéné que pour l'eau.

Le brevet américain 4 182 687 décrit une composition de démouillage qui répond à ces trois critères. Cette composition est constituée d'un fluorochlorocarbure, en fait principalement de trichloro-1,1,2-trifluoro-1,2,2-éthane contenant un agent tensio-actif dont la partie cationique a pour formule :

$$R_m\overset{\oplus}{N}\,R'_n$$

dans laquelle :

m = 2 ou 3
n = 1 ou 2
m + n = 4
R = alcoyle en $C_6$ à $C_{18}$
R' = groupe alcoyle $C_1$ à $C_2$

La partie anionique de la formule de l'agent tensio-actif peut être très variée mais les auteurs ont découvert qu'il existe une corrélation entre les dimensions de la partie anionique et les valeurs de m et de n, c'est-à-dire les dimensions de la partie cationique. Des anions aussi divers que les halogénures, les alcoylphosphates, les alkylcarboxylates, les alkyl ou les arylsulfonates, les alkylsulfates ou les sulfosuccinates sont utilisables, mais les meilleurs résultats ont été obtenus avec les phosphates de mono et de dialcoyle. Il a par ailleurs été montré que si les propriétés de déplacement de l'eau sont en général bonnes pour n'importe quel couple de cations et d'anions, l'obtention d'une composition présentant par ailleurs une bonne résistance à l'extraction du tensio-actif par l'eau et ne formant pas d'émulsion au cours de son utilisation ne peut être réalisée qu'avec certains couples cations-anions. Ainsi dans le cas des anions préférés dans le brevet ci-dessus, c'est-à-dire les mélanges de phosphates de mono et de dialcoyle :

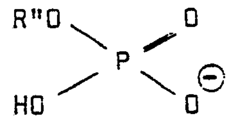

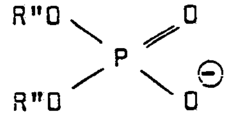

le radical R" est un groupe alcoyle de $C_1$ à $C_{18}$, lorsque m = 3 et un groupe alcoyle de $C_8$ à $C_{18}$ quand m = 2. Les produits préférés du brevet ci-dessus sont les compositions contenant un agent tensio-actif répondant aux formules :

$$(C_{12}H_{25})_2\overset{\oplus}{N}(CH_3)_2(C_8H_{17}O)_{1,5}(OH)_{0,5}PO_2^{\ominus}$$

et

$$(C_{12}H_{25})_2\overset{\oplus}{N}(CH_3)_2(C_{13}H_{27}O)_{1,5}(OH)_{0,5}PO_2^{\ominus}$$

et plusieurs exemples de ce brevet montrent que les hexylphosphates (ex. 27) ou les butylphosphates (ex. 26, 28, 32) du même ammonium quaternaire ou du même type d'ammonium quaternaire (m = 2) ne sont pas utilisables car les compositions forment avec l'eau des émulsions très difficilement séparables en deux phases.

L'agent tensio-actif plus spécialement utilisé dans les compositions décrites dans ce brevet n'étant pas un produit industriel facilement disponible, l'auteur a pu montrer qu'il peut être formé in situ à partir de produits commerciaux conformément à l'équation suivante :

$$C_8H_{17}\overset{+}{N}H_3(C_8H_{17}O)_{1,5}(OH)_{0,5}PO_2^{\ominus} + (C_{12}H_{25})_2\overset{\oplus}{N}(CH_3)_2Cl^{\ominus}$$

$$\longrightarrow (C_{12}H_{25})_2\overset{\oplus}{N}(CH_3)_2\overset{\ominus}{O}_2P(OH)_{0,5}(OC_8H_{17})_{1,5} + C_8H_{17}\overset{\oplus}{N}H_3Cl^{\ominus}$$

Une composition contenant des quantités stœchiométriques de chlorhydrate d'ammonium quaternaire, d'octylphosphate et d'octylamine fournit ainsi les mêmes résultats aux cours du procédé de séchage qu'une composition contenant uniquement l'octylphosphate d'ammonium quaternaire.

Etudiant plus en détail le mode de préparation de ces alcoylphosphates d'ammonium quaternaire selon la méthode décrite dans le brevet américain ci-dessus c'est-à-dire :

$$R_m\overset{\oplus}{N}\ R'_n\overset{\ominus}{Cl} + (R"O)_p(HO)_{2-p}PO_2H + R'"NH_2$$

$$\longrightarrow R_m\overset{\oplus}{N}\ R'_n(R"O)_p(HO)_{2-p}P\overset{\ominus}{O}_2 + R'"\overset{\oplus}{N}H_3Cl^{\ominus}$$

où p est une valeur comprise entre 1 et 2, la demanderesse a constaté que les propriétés finales des compositions de démouillage contenant les tensio-actifs ainsi préparés dépendent de la nature de l'amine $R'"NH_2$. Il a ainsi été constaté que si le tensio-actif est fabriqué à l'aide d'une amine fluorée

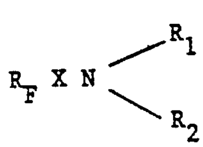

dans laquelle le groupe $R_F$ représente une chaîne aliphatique perfluorée et X un groupe de liaison bivalent, les propriétés de séchage de la composition finale sont très voisines de celles obtenues lorsque le tensio-actif est préparé à l'aide d'une amine aliphatique classique telle que l'octylamine utilisée dans le

brevet américain, mais les propriétés d'extractibilité par l'eau et surtout d'émulsionnement avec l'eau sont améliorées.

La présente invention concerne une composition de démouillage ne fournissant pas d'émulsions stables avec l'eau constituée essentiellement d'un chlorofluorocarbure liquide à température ambiante, de préférence le trichloro-1,1,2-trifluoro-1,2,2-éthane et d'un agent tensio-actif dont la partie cationique répond à la formule :

$$R_2\overset{\oplus}{N}\ R'_2$$

R est un groupe alcoyle $C_6$ à $C_{18}$

R' est un groupe alcoyle $C_1$ à $C_2$

et la partie anionique un alcoylphosphate de formule :

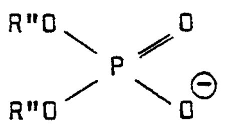

ou

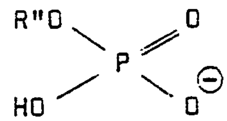

ou d'un mélange de ces deux alcoylphosphates c'est-à-dire d'un alcoylphosphate de formule :

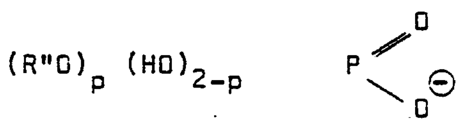

où p est une valeur comprise entre 1 et 2 et où R" est un groupement alcoyle $C_1$ à $C_{18}$. La composition tensio-active conforme à l'invention est obtenue par réaction du chlorure d'ammonium quaternaire

$$R_2\overset{\oplus}{N}\ R'_2\overset{\ominus}{Cl}$$

avec l'acide alcoylphosphorique

$$(R"O)_p(HO)_{2-p}PO_2H$$

en présence d'une amine fluorée répondant à la formule :

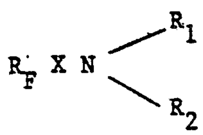

où $R_F$ représente une chaîne perfluorée $C_qF_{2q+1}$ linéaire ou ramifiée dans laquelle q est un nombre entier compris entre 2 et 20, X est un groupe de liaison bivalent, éventuellement partiellement halogéné et $R_1$ et $R_2$ représentent l'hydrogène, un radical alcoyle ou un radical hydroxyalcoyle. Les amines utilisables peuvent être des amines primaires, secondaires ou tertiaires dont certaines, de façon non limitative, sont par exemple :

$R_FC_2H_4NH_2$
$R_FC_2H_4N(C_2H_5)_2$
$R_FCF{=}CH{-}CH_2N(C_2H_5)_2$
$R_FC_2H_4NHC_2H_4OH$
$R_FCF{=}CH{-}CH_2NHC_2H_4OH$
$R_FC_2H_4N(C_2H_4OH)_2$
$R_FCF{=}CHCH_2N(C_2H_4OH)_2$
$R_FC_2H_4SO_2NHCH_2CH_2CH_2N(CH_3)_2$
$R_FC_2H_4CONHCH_2CH_2CH_2N(CH_3)_2$
$R_FSO_2NHCH_2CH_2CH_2N(CH_3)_2$
$R_FCONHCH_2CH_2CH_2N(CH_3)_2$

Ces amines peuvent être fabriquées selon des méthodes connues et décrites par exemple dans les brevets français 1 532 284, 1 588 865, 2 102 753, 2 088 594 ou 2 086 904 ou dans les brevets américains 2 764 202 ou 2 759 019. Les amines préférées de l'invention sont les produits répondant à la formule :

$$R_FC_2H_4SO_2NHCH_2CH_2CH_2N(CH_3)_2$$

$$R_FC_2H_4CONHCH_2CH_2CH_2N(CH_3)_2$$

Les acides alcoylphosphates conformes à l'invention sont de préférence les produits commerciaux constitués de mélange d'acide monoalcoyl phosphorique et d'acide dialcoylphosphorique :

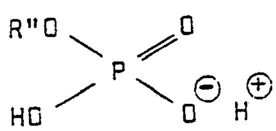

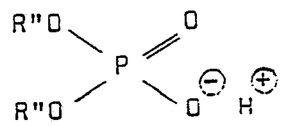

où R" représente un radical alcoyle de $C_1$ à $C_{18}$. La proportion pondérale des deux acides est en général comprise entre 60/40 et 40/60. Les produits préférés de l'invention sont des sels mélangés où R" représente un groupe butyle, hexyle, éthylhexyle, octyle ou tridécyle.

Les chlorures d'ammonium quaternaires utilisables dans le procédé de l'invention, c'est-à-dire :

$$R_2\overset{\oplus}{N}\,R'_2\overset{\ominus}{Cl}$$

où

R = alcoyl $C_6$ à $C_{18}$
R' = alcoyl $C_1$ à $C_2$

sont aussi disponibles dans le commerce et on préfère particulièrement les produits où R' est un groupe méthyle et R un groupe $C_{12}H_{25}$ ou $C_{18}H_{37}$.

Les produits commerciaux sont en fait en général obtenus à partir des acides gras et sont dans ce cas des mélanges de différents homologues dont la composition dépend de la matière première utilisée. Ainsi la société PIERREFITTE-AUBY commercialise sous le nom de NORAMIUM M 2C et NORAMIUM M2 SH des produits répondant à la formule :

$$R_2\overset{\oplus}{N}(CH_3)_2\overset{\ominus}{Cl}$$

où les compositions pondérales de la chaîne grasse sont les suivantes :

| | Noramium M2C | Noramium M2SH |
|---|---|---|
| $C_8$ | 3 % | |
| $C_{10}$ | 6 % | |
| $C_{12}$ | 56 % | 0,1 % |
| $C_{14}$ | 18 % | 0,9 % |
| $C_{16}$ | 10 % | 28 % |
| $C_{18}$ saturé | 2 % | 71 % |
| $C_{18}$ insaturé | 5 % | |

Ces produits conviennent parfaitement à l'invention.

Au cours de la préparation de la composition tensio-active par mélange dans le chlorofluorocarbure des trois constituants, c'est-à-dire du chlorure d'ammonium quaternaire, de l'acide alcoylphosphorique et de l'amine fluorée, il se forme du chlorhydrate de l'amine fluorée qui en fonction de sa solubilité dans le milieu peut soit rester soluble, soit précipiter partiellement. Dans le cas des amines fluorées fournissant un précipité chlorhydrate insoluble le mélange peut être utilisé tel quel pour le démouillage et dans ce cas le chlorhydrate d'amine est progressivement éliminé par dissolution dans l'eau au cours du procédé de séchage. On a cependant intérêt à éliminer le chlorhydrate précipité par exemple par filtration de façon à pouvoir disposer d'une composition de démouillage parfaitement homogène. Cette filtration de la partie du chlorhydrate d'amine qui a précipité dans le milieu peut être faite sur la composition finale de démouillage contenant la quantité requise d'agent tensio-actif et cette composition peut ainsi être directement utilisée dans le procédé de séchage après filtration. L'élimination éventuelle du chlorhydrate d'amine précipité peut aussi et de préférence être réalisée sur une solution concentrée de la même composition tensio-active, la solution finale de démouillage étant obtenue à partir de cette solution concentrée et filtrée, par dilution avec le chlorofluorocarbure. Il est ainsi possible de préparer des compositions de trichloro-1,1,2-trifluoro-1,2,2-éthane contenant par exemple 10 à 30 % de la composition tensio-active c'est-à-dire du mélange du chlorure d'ammonium quaternaire, de l'acide ou des acides alcoylphosphoriques et de l'amine fluorée. Au bout de quelques heures de repos la solution peut être

filtrée et on obtient ainsi le chlorhydrate d'amine dont la quantité dépend essentiellement de la nature de l'amine fluorée. Ainsi dans le cas de l'amine de formule :

$$C_6F_{13}C_2H_4SO_2NHCH_2CH_2CH_2N(CH_3)_2$$

on récupère par filtration environ 50 % de la quantité théorique de chlorhydrate d'amine et dans le cas de l'amine :

$$C_8F_{17}C_2H_4N(C_2H_4OH)_2$$

le chlorhydrate reste entièrement en solution. Après séparation par filtration du chlorhydrate d'amine la solution peut être diluée avec du trichlorotrifluoroéthane de façon à ce que la concentration en agent tensio-actif corresponde à celle requise pour les opérations de démouillage. La dilution de la solution concentrée permet d'obtenir une composition liquide parfaitement homogène, utilisable pour les opérations de séchage.

La quantité d'agent tensio-actif dissoute dans le chlorofluorocarbure et donnant lieu à de bonnes propriétés de séchage peut être très faible. Elle est en général comprise entre 0,05 g et 5 g d'agent tensio-actif par litre de chlorofluorocarbure, de préférence entre 0,1 et 2,5 g par litre.

L'efficacité des compositions de démouillage selon la présente invention peut être déterminée par un certain nombre de tests caractéristiques du comportement de ces compositions dans les machines industrielles de séchage. Ces tests sont les suivants :

— test de séchage de verre fritté,
— test d'émulsionnement,
— test d'extractibilité par l'eau.

Les modes opératoires utilisés pour ces différents tests sont les suivants :

1) Test de séchage de verre fritté

Une capsule en verre fritté pesant 3,2 g est parfaitement nettoyée à l'aide d'un mélange sulfochromique, puis lavée à l'eau et séchée. La capsule est ensuite trempée pendant 1/4 heure dans de l'eau distillée puis plongée pendant quatre minutes dans 50 ml de la composition de démouillage, maintenue à reflux. La capsule est ensuite trempée dans 50 ml de méthanol anhydre pendant 1/2 heure. Les déterminations des teneurs en eau du méthanol (méthode de KARL FISCHER) avant et après trempage de la capsule permettent de calculer la quantité d'eau non éliminée par le séchage. Lorsqu'un tel test de séchage est réalisé avec du trifluorotrichloroéthane ne contenant pas d'agent tensio-actif, la quantité d'eau non éliminée par le traitement est voisine de 400-450 mg. Les compositions selon l'invention dont les résultats sont indiqués dans les exemples ci-dessous ne laissent qu'environ 30 à 50 mg d'eau sur le fritté.

2) Test d'émulsionnement

50 ml de la composition de démouillage sont énergiquement agités avec 20 ml d'eau pendant 30 secondes dans une éprouvette graduée. On laisse ensuite reposer l'émulsion de façon à ce qu'elle se sépare en deux phases et on relève en fonction du temps les volumes des deux phases qui sont parfaitement limpides. Ce test permet ainsi de déterminer la vitesse de séparation de l'émulsion en deux phases et permet aussi de vérifier quelle est la phase (aqueuse ou organique) qui se sépare le mieux.

3) Test d'extractibilité

200 ml de composition de démouillage contenant 0,5 % en poids d'agent tensio-actif sont traités deux fois avec 20 ml d'eau distillée en laissant s'écouler suffisamment de temps pour obtenir une décantation parfaite. Par évaporation de la composition restante et pesée du résidu après séchage à 70° pendant 24 heures, on détermine la teneur en agent tensio-actif de la composition après extraction à l'eau. Par comparaison avec un essai témoin, c'est-à-dire par détermination de l'extrait sec d'une composition identique n'ayant pas été lavée à l'eau, on peut déterminer le pourcentage de produits tensio-actifs extraits par l'eau.

L'efficacité de démouillage des compositions selon l'invention, c'est-à-dire la faculté de déplacer l'eau des surfaces des objets est excellente et ne dépend pas de la méthode de préparation des compositions. Des teneurs très faibles en agent tensio-actif, même inférieures à 0,1 g/l sont déjà très efficaces. Les compositions à base d'alcoylphosphates d'ammonium quaternaire sont en particulier beaucoup plus performantes que les compositions à base d'alcoylphosphates d'amine utilisées largement dans la plupart des installations industrielles de démouillage. Ce dernier type d'agent tensio-actif n'a en effet qu'une faible efficacité de séchage mais a l'avantage de ne former que des émulsions se séparant très facilement en deux phases, ce qui leur a permis de s'imposer sur le marché. Les

compositions tensio-actives selon l'invention et préparées selon le procédé de l'invention permettent de combiner une bonne efficacité de démouillage, une faible extractibilité par l'eau et une faible tendance à l'émulsionnement.

Les compositions selon l'invention sont en général utilisées à des concentrations comprises entre 0,05 et 5 g de matière tensio-active par litre de solvant de préférence entre 0,1 et 1 g/l. La matière tensio-active est préparée en mélangeant le chlorure d'ammonium quaternaire, l'acide alcoylphosphorique et l'amine fluorée de préférence en quantités stœchiométriques mais un excès ou un défaut de l'un des trois réactifs ne nuit pas fondamentalement au procédé de démouillage. Les surfaces desquelles l'eau peut être éliminée au moyen des compositions selon l'invention, ne sont pas limitées à une matière particulière telle que le verre par exemple. Bien que ces compositions donnent en particulier d'excellents résultats pour le séchage du verre, elles sont aussi utilisables pour n'importe quelle substance solide, insoluble, non attaquable par ces compositions. De telles substances peuvent être des surfaces métalliques, des métaux ferreux, des aciers inoxydables, le nickel et ses alliages, le chrome et ses alliages, le cuivre, les laitons, les bronzes, le cadmium, les métaux à base d'argent, d'or, de platine, de titane, etc... D'autres surfaces qui peuvent être traitées pour l'élimination de l'eau comprennent par exemple les matières réfractaires, telles que l'alumine, la silice, la magnésie, ou les matières plastiques comme par exemple les polyamides, le polyéthylène, le polypropylène, les polycarbonates et les matières du même genre.

Les exemples suivants ont pour but d'illustrer l'invention sans toutefois la limiter. Ces exemples ont été effectués avec les acides alcoylphosphoriques et chlorures d'ammonium quaternaires suivants :

— chlorure de diméthyl dilauryl ammonium

$$(C_{12}H_{25})_2\overset{\oplus}{N}(CH_3)_2Cl^{\ominus}$$

commercialisé par la société PIERREFITTE-AUBY sous le nom de NORAMIUM M 2C. Le produit commercial est à 75 % de matière active dans l'isopropanol, contient 0,161 équivalent chlorure pour 100 g et est constitué d'un mélange de différents homologues dans lequel la répartition des chaînes grasses est la suivante :

| | |
|---|---|
| $C_8$ | 3 % |
| $C_{10}$ | 6 % |
| $C_{12}$ | 56 % |
| $C_{14}$ | 18 % |
| $C_{16}$ | 10 % |
| $C_{18}$ saturé | 2 % |
| $C_{18}$ insaturé | 5 % |

— chlorure de diméthyldistéaryl ammonium

$$(C_{18}H_{37})_2\overset{\oplus}{N}(CH_3)_2Cl^{\ominus}$$

commercialisé par PIERREFITTE-AUBY sous le nom de NORAMIUM M 2SH. Le produit commercial contient 75 % de matière active, 0,135 équivalent chlorure pour 100 g et a une répartition des chaînes grasses correspondant à :

| | |
|---|---|
| $C_{12}$ | 0,1 % |
| $C_{14}$ | 0,9 % |
| $C_{16}$ | 28 % |
| $C_{18}$ | 71 % |

— acide butylphosphorique $(C_4H_9O)_{1,5}(OH)_{0,5}PO_2H$

Le produit utilisé est commercialisé par PCUK et présente les indices d'acidité suivants :

| | |
|---|---|
| acidité forte | 0,566 équivalent pour 100 g |
| acidité faible | 0,276 équivalent pour 100 g |

ce qui correspond à un mélange contenant environ 40 % d'acide monobutylphosphorique et 60 % d'acide dibutylphosphorique.

— acide octylphosphorique $(C_8H_{17}O)_{1,5}(HO)_{0,5}PO_2H$

Produit commercialisé par PCUK ayant les indices d'acidité suivants :

| | |
|---|---|
| acidité forte | 0,378 équivalent pour 100 g |
| acidité faible | 0,222 équivalent pour 100 g |

ce qui correspond à un mélange de 47 % d'acide monooctyl et de 42 % d'acide dioctylphosphorique.

Tous les essais ci-dessous ont été effectués en utilisant comme chlorofluorocarbure liquide le trichloro-1,1,2-trifluoro-1,2,2-éthane ou FORANE 113 F (F 113) marque déposée par la demanderesse.

Les exemples 1, 2, 5, 15 ne sont pas représentatifs de l'invention et concernent au contraire des compositions qui ont déjà été décrites dans l'art. antérieur. Ces exemples permettent de mieux montrer la supériorité des produits selon l'invention.

Exemple 1

Cet exemple correspond à la composition protégée par le brevet français 1 515 393. Une solution de FORANE 113, marque déposée PCUK, contenant 1 g/l d'octylphosphate d'éthyl-2 hexylamine a été préparée en mélangeant 1 partie d'éthyl-2 hexylamine avec 2,05 parties d'acide octylphosphorique dans du F 113 de façon à avoir une concentration de 1 g/l. Cette composition a fourni les résultats suivants au cours de nos trois tests :

— test de séchage à 1 g/l pendant 4 minutes : 328 mg d'eau non éliminée,

— test d'émulsionnement : séparation totale en 50 ml de phase inférieure et 20 ml de phase supérieure limpides en moins de 1 min.,

— test d'extractibilité : 11 % de produit extrait à l'eau.

Exemple 2

Cet exemple correspond à une composition décrite dans le brevet américain 4 182 687. On a préparé une solution contenant un agent tensio-actif répondant à la formule :

$$(C_8H_{17}O)_{1,5}(HO)_{0,15}PO_2^{\ominus}(C_{12}H_{25})_2\overset{\oplus}{N}(CH_3)_2$$

en dissolvant dans 900 g de F 113 :

61 g de NORAMIUM M2C
26 g d'acide octylphosphorique
12,7 g d'éthyl-2 hexylamine

Cette solution à 8,5 % d'extrait sec ne donne lieu à aucune précipitation et a été diluée à 0,5 % et 0,85 g/l de façon à pouvoir effectuer les tests de démouillage.

— test de séchage à 0,85 g/l pendant 4 minutes : 30 mg eau non éliminée,

— test d'émulsionnement à 0,85 g/l,

| Durée | Volumes des phases limpides Phase inférieure | Phase supérieure |
|---|---|---|
| 8 min | 44 | 8 |
| 30 min | 48 | 15 |
| 60 min | 49 | 18 |

— test d'extractibilité : 17,5 % de produit extrait à l'eau.

Exemple 3

On a préparé une composition contenant un tensio-actif répondant à la formule :

$$(C_8H_{17}O)_{1,5}(HO)_{0,5}PO_2^{\ominus}(C_{12}H_{25})_2\overset{\oplus}{N}(CH_3)_2$$

c'est-à-dire identique à celui de l'exemple 2, mais préparé en remplaçant l'éthyl-2 hexylamine par une amine fluorée de formule :

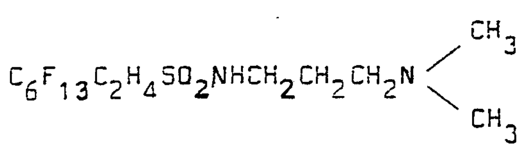

Pour ce faire on a mélangé dans 150 g de F 113 des quantités stœchiométriques des trois réactifs, c'est-à-dire :

9,48 g de NORAMIUM M2C
4,04 g d'acide octylphosphorique

7,83 g de 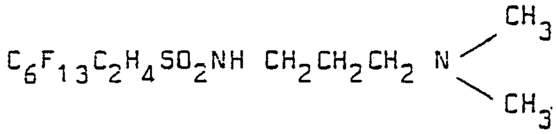

La solution initiale se trouble assez rapidement et après filtration après 24 heures de repos on a obtenu 4,8 g d'un solide cristallisé blanc qui a été identifié comme étant le chlorhydrate et l'amine fluorée. La quantité de chlorhydrate éliminé par filtration correspond à 57 % en mole de l'amine fluorée engagée.

Le filtrat, parfaitement limpide, peut être dilué sans donner lieu à une nouvelle précipitation de chlorhydrate.

Les tests ont donné les résultats suivants :

— test de séchage à 0,85 g/l (4 min.) : 27 mg d'eau non éliminée,
— test d'extractibilité : 2 % de produit extrait à l'eau,
— test d'émulsionnement à 0,85 g/l.

| Durée | Volumes des phases limpides | |
|---|---|---|
| | Phase inférieure | Phase supérieure |
| 3 min | 45 | 10 |
| 8 min | 49 | 19 |
| 15 min | 50 | 20 |

Exemple 4

Une composition semblable à celle de l'exemple 3 a été faite en engageant :

8,3 g NORAMIUM M2C
4,03 g acide octylphosphorique
7,83 g $C_6F_{13}C_2H_4SO_2NHCH_2CH_2CH_2N(CH_3)_2$

Cette composition contient 0,88 mole de NORAMIUM M2C par mole d'acide octylphosphorique et par mole d'amine. On a récupéré par filtration 4,8 g de chlorhydrate d'amine fluorée.

Cette composition a fourni les résultats suivants :

— test de séchage à 0,85 g/l : 27 mg d'eau non éliminée,
— test d'émulsionnement à 0,85 g/l.

| Durée | Volumes des phases limpides | |
|---|---|---|
| | Phase inférieure | Phase supérieure |
| 3 min | 40 | 17 |
| 8 min | 49 | 19 |
| 15 min | 50 | 20 |

La comparaison des essais 2, 3 et 4 permet de constater que le remplacement de l'éthyl-2 hexylamine par l'amine de formule :

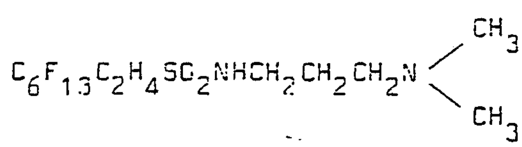

ne modifie pas l'efficacité du séchage proprement dit, mais diminue la susceptibilité d'extraction à l'eau du tensio-actif et surtout améliore de façon notable et importante la séparation en deux phases de l'émulsion éventuellement formée.

Exemple 5

Cet exemple concerne une composition contenant un tensio-actif répondant à la formule :

$$(C_4H_9O)_{1,5}(HO)_{0,5}PO_2^{\ominus}\ (C_{12}H_{25})_2\overset{\oplus}{N}(CH_3)_2$$

préparé selon les indications du brevet américain 4 182 687. Une telle composition est cependant en dehors du cadre de l'invention de ce brevet américain en raison de sa grande facilité à former des émulsions.

Pour préparer cette composition, on a mélangé dans du F 113 les quantités suivantes des trois produits :

9,48 g NORAMIUM M2 C
2,69 g acide butylphosphorique
1,95 g éthyl-2 hexylamine

Après dilution à 0,5 % et 850 mg/l les tests ont permis d'obtenir les résultats suivants :

— Test de séchage à 0,85 g/l (4 min.) : 34 mg eau non éliminée.
— Test d'extractibilité : 27 % de produit extrait à l'eau.
— Test d'émulsionnement à 0,85 g/l.

| Durée | Volumes des phases limpides | |
|---|---|---|
| | Phase inférieure | Phase supérieure |
| 8 min | 35 | 2 |
| 30 min | 43 | 2 |
| 60 min | 45 | 2 |

Exemple 6

On a préparé une composition de démouillage contenant le même tensio-actif que celui de l'essai 5, c'est-à-dire :

$$(C_4H_9O)_{1,5}(HO)_{0,5}PO_2^{\ominus}\ (C_{12}H_{25})_2\overset{\oplus}{N}(CH_3)_2$$

mais en utilisant l'amine fluorée $C_6F_{13}C_2H_4SO_2NHC_3H_6N(CH_3)_2$ à la place de l'éthyl-2 hexylamine.

On a ainsi mélangé :

50 g NORAMIUM M2C
14,2 g acide butylphosphorique
41,3 g $C_6F_{13}C_2H_4SO_2NHCH_2CH_2CH_2N(CH_3)_2$
600 g Forane 113 .

Les quantités utilisées correspondent aux quantités stœchiométriques. Après 10 heures de repos à température ambiante, le mélange a été filtré et on a obtenu 22,3 g de chlorhydrate d'amine identifié comme étant :

$$C_6F_{13}C_2H_4SO_2NHCH_2CH_2CH_2N(CH_3)_2,\ HCl$$

Le filtrat a ensuite été complété à 707 g avec du Forane 113 de façon à donner une solution concentrée à 10 % de matière active. Les solutions diluées nécessaires au procédé de démouillage ont été préparées à partir de cette solution concentrée et étaient parfaitement limpides. Les résultats des tests sont les suivants :

— Test de séchage

0,85 g/l (4 min.) 33 mg d'eau non éliminée
0,085 g/l (4 min.) 33 mg d'eau non éliminée
0,85 g/l (10 min.) 30 mg d'eau non éliminée

— Test d'extractibilité : 3,25 % de produit extrait à l'eau.
— Test d'émulsionnement à 0,85 g/l.

| Durée | Volumes des phases limpides | |
|---|---|---|
| | Phase inférieure | Phase supérieure |
| 3 min | 46 | 19 |
| 5 min | 46 | 19,5 |
| 8 min | 47 | 20 |
| 15 min | 48 | 20 |

Exemples 7 à 10

On a préparé des compositions de démouillage contenant le même agent tensio-actif que celui de l'exemple 6, préparé selon la même méthode et avec la même amine fluorée $C_6F_{13}C_2H_4SO_2NHCH_2CH_2CH_2N(CH_3)_2$, les quantités respectives des différents réactifs étant variables.

| | Ex. 7 | | Ex. 8 | | Ex. 9 | | Ex. 10 | |
|---|---|---|---|---|---|---|---|---|
| | g | mole | g | mole | g | mole | g | mole |
| Noramium M 2 C | 8,32 | 0,88 | 10,6 | 1,12 | 9,46 | 1 | 9,46 | 1 |
| Ac. butylphosphorique | 2,69 | | 2,69 | 1 | 2,69 | 1 | 2,69 | 1 |
| $C_6F_{13}C_2H_4SO_2NHC_3H_6N(CH_3)_2$ | 7,82 | 1 | 7,82 | 1 | 5,86 | 0,75 | 3,90 | 0,5 |
| Forane 113 | 150 | | 150 | | 150 | | 150 | |
| Poids de chlorhydrate filtré | 4,2 | | 4,5 | | 4,2 | | 3,5 | |

Les différents tests ont fourni les résultats suivants :

— Test de séchage à 0,85 g/l pendant 4 minutes

| | Ex. 7 | Ex. 8 | Ex. 9 | Ex. 10 |
|---|---|---|---|---|
| Quantité d'eau non éliminée en mg | 33 | 23 | 45 | 20 |

— Test d'émulsionnement à 0,85 g/l

| Durée en minutes | Volumes des phases limpides | | | | | | | |
|---|---|---|---|---|---|---|---|---|
| | Phase inférieure | | | | Phase supérieure | | | |
| | Ex. 7 | Ex. 8 | Ex. 9 | Ex. 10 | Ex. 7 | Ex. 8 | Ex. 9 | Ex. 10 |
| 3 | 45 | 47 | 45 | | 19 | 18 | 17 | |
| 5 | 46 | 48 | | 15 | 19,5 | 19 | | 7 |
| 8 | 47 | 48 | 47 | 23 | 20 | 20 | 19 | 10 |
| 15 | 48 | 49 | 47 | | 20 | 20 | 19,5 | |
| 30 | | | | 32 | | | | 15 |

La comparaison des essais 5 et 6 à 10 permet de constater qu'une composition contenant l'agent tensio-actif :

$$(C_4H_9O)_{1,5}(HO)_{0,5}PO_2^{\ominus}(C_{12}H_{25})_2\overset{\oplus}{N}(CH_3)_2$$

n'est effectivement pas utilisable pour le démouillage lorsqu'elle est préparée par réaction du chlorhydrate, de l'acide butylphosphorique et d'octylamine comme indiqué dans le brevet américain 4 182 687 car elle forme avec l'eau une émulsion très difficilement séparable en deux phases. En revanche lorsque ce même agent tensio-actif est obtenu par réaction en présence de :

$$C_6F_{13}C_2H_4SO_2NHCH_2CH_2CH_2N(CH_3)_2$$

la composition donne des émulsions qui se séparent très facilement et très rapidement en deux phases claires et limpides.

Exemples 11 à 14

Des compositions contenant le même agent tensio-actif que celui des exemples 5 à 10 ont été obtenues en faisant réagir le NORAMIUM M2C avec l'acide butylphosphorique en présence de différentes amines fluorées. Ces trois réactifs ont toujours été engagés en quantités stœchiométriques.

On a au cours des 4 essais mélangé dans 150 g de F 113 :

9,46 g NORAMIUM M2C
2,69 g acide butylphosphorique

et les quantités suivantes des différentes amines fluorées.

Ex. 11 : 8,3 g d'un mélange d'amine fluorée constitué de :

60 % $C_8F_{17}C_2H_4N(C_2H_4OH)_2$
40 % $C_7F_{15}CH = CH—CH_2—N(C_2H_4OH)_2$

Ex. 12 : 8,9 g d'un mélange d'amine de formule :

$R_FC_2H_4SO_2NHCH_2CH_2CH_2N(CH_3)_2$ contenant :

| | |
|---|---|
| 1 % de produit avec $R_F$ = | $C_4F_9$ |
| 48 % | $C_6F_{13}$ |
| 30 % | $C_8F_{17}$ |
| 12 % | $C_{10}F_{21}$ |
| 5,5 % | $C_{12}F_{25}$ |
| 2 % | $C_{14}F_{29}$ |
| 1 % | $C_{16}F_{33}$ |
| 0,5 % | $C_{18}F_{37}$ |

Ex. 13 : 7,8 g d'un mélange d'amine fluorée constitué de :

20 % de $C_8F_{17}C_2H_4N(C_2H_5)_2$
80 % de $C_7F_{15}CF = CH—CH_2—N(C_2H_5)_2$

Ex. 14 : 8,8 g d'une amine fluorée de formule :

$C_8F_{17}C_2H_4CONHCH_2CH_2CH_2N(CH_3)_2$

La composition de l'exemple 11 est restée limpide tandis que les trois autres ont donné lieu à une précipitation du chlorhydrate d'amine qui a été éliminé par filtration. Les solutions concentrées ont ensuite été diluées à 0,85 g/l de matière active et ont été testées.

— Test de séchage à 0,85 g/l pendant 4 minutes

| | Ex. 11 | Ex. 12 | Ex. 13 | Ex. 14 |
|---|---|---|---|---|
| Quantité d'eau non éliminée en mg | 37 | 44 | 31 | 28 |

— Test d'extractibilité

Ex. 12 : 2 % de produit extrait à l'eau
Ex. 14 : 1 % de produit extrait à l'eau

— Test d'émulsionnement à 0,85 g/l

| Durée en minutes | Volumes des phases limpides | | | | | | | |
|---|---|---|---|---|---|---|---|---|
| | Phase inférieure | | | | Phase supérieure | | | |
| | Ex. 11 | Ex. 12 | Ex. 13 | Ex. 14 | Ex. 11 | Ex. 12 | Ex. 13 | Ex. 14 |
| 3 | 42 | 44 | 30 | 47 | 12 | 15 | 3 | 19 |
| 8 | 45 | 46 | 45 | 48 | 16 | 18 | 6 | 20 |
| 30 | 46 | 48 | 47 | 49 | 17 | 19 | 15 | 20 |

## Exemple 15

Une composition contenant un agent tensio-actif de formule :

$$(C_{18}H_{37})_2\overset{\oplus}{N}(CH_3)_2(C_4H_9O)_{1,5}(HO)_{0,5}PO_2^{\ominus}$$

a été préparée selon les indications du brevet américain 4 182 687 en mélangeant dans 150 g de Forane 113 :

| | |
|---|---|
| NORAMIUM M 2 SH | 11,3 g |
| Acide butylphosphorique | 2,7 g |
| éthyl-2 hexylamine | 1,97 g |

Cette solution, légèrement trouble a été diluée à 0,5 % et 0,85 g/l afin de pouvoir effectuer les tests :

— Test de séchage à 0,85 g/l pendant 4 minutes : 29 mg d'eau non éliminée.
— Test d'extractibilité : 30 % de produit extrait à l'eau.
— Test d'émulsionnement à 0,85 g/l

| Durée | Volume des phases limpides | |
|---|---|---|
| | Phase inférieure | Phase supérieure |
| 3 min | 45 | 1 |
| 8 min | 48 | 1 |
| 15 min | 49 | 1 |

## Exemple 16

Une composition contenant le même tensio-actif que celui de l'exemple 15 c'est-à-dire :

$$(C_4H_9O)_{1,5}(HO)_{0,5}PO_2^{\ominus}(C_{18}H_{37})_2\overset{\oplus}{N}(CH_3)_2$$

a été préparée en remplaçant l'éthyl-2 hexylamine par l'amine fluorée de formule :

$$C_6F_{13}C_2H_4SO_2NHC_3H_6N(CH_3)_2$$

On a ainsi mélangé dans 150 g de Foráne 113 :

11,3 g NORAMIUM M 2 SH
2,7 g Acide butyl phosphorique
7,83 g $C_6F_{13}C_2H_4SO_2NHCH_2CH_2CH_2N(CH_3)_2$

La solution obtenue a été filtrée après 48 heures de repos et a été testée après dilution avec du F 113.

— Test de séchage à 0,85 g/l (4 minutes) : 38 mg d'eau non éliminée.
— Test d'extractibilité : 11 % de produit extrait à l'eau.
— Test d'émulsionnement à 0,85 g/l

| Durée | Volume des phases limpides | |
|---|---|---|
| | Phase inférieure | Phase supérieure |
| 3 min | 50 | 20 |

En résumé, les exemples représentatifs et comparatifs ci-dessus illustrent bien l'invention et permettent de se rendre compte que lorsque la composition tensio-active répondant à la formule :

$$(R''O)_p(HO)_{2-p}PO_2^{\ominus}\ R_2\overset{\oplus}{N}R'_2$$

où R, R', R" et p ont les significations indiquées ci-dessus, est préparée par réaction du chlorure d'ammonium quaternaire

$$R_2\overset{\oplus}{N}\ \ R'_2Cl^{\ominus}$$

avec l'acide alcoyl phosphorique

$$(R''O)_p(HO)_{2-p}PO_2H$$

en présence d'une amine fluorée :

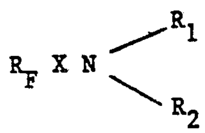

Les propriétés requises pour assurer un bon séchage sont nettement meilleures que lorsque la même composition est préparée à l'aide d'une amine aliphatique non fluorée telle que l'éthyl-2 hexylamine.

L'utilisation d'une amine fluorée permet d'obtenir des compositions tensio-actives s'extrayant plus difficilement à l'eau. L'avantage principal et industriellement très important est cependant une tendance moins marquée à l'émulsionnement en présence d'eau.

Les différences de propriétés des compositions préparées selon les deux méthodes sont particulièrement nettes dans le cas des agents tensio-actifs dont l'anion est un butylphosphate. Ceci est illustré par les exemples comparatifs 5 et 6 concernant :

$$(C_4H_9O)_{1,5}(HO)_{0,5}PO_2^{\ominus}\ (C_{12}H_{25})_2\overset{\oplus}{N}(CH_3)_2$$

et les exemples 15 et 16 concernant :

$$(C_4H_9O)_{1,5}(HO)_{0,5}PO_2^{\ominus}\ (C_{18}H_{37})_2\overset{\oplus}{N}(CH_3)_2$$

Les deux compositions contenant ces tensio-actifs préparés à l'aide d'éthyl-2 hexylamine (ex. 5 et 15) forment très facilement des émulsions qui sont très longues à se séparer en deux phases. Dans le cas de la préparation en présence de l'amine fluorée (ex. 6 et 16 par exemple) les émulsions éventuellement formées se séparent très facilement en deux phases.

Le même phénomène est perceptible dans le cas des compositions à base d'octylphosphates (ex. 2 et 3).

**Revendications**

1. Composition de démouillage utilisée pour le déplacement d'eau liquide constituée d'un chlorofluorocarbure liquide à température ambiante contenant un agent tensio-actif répondant à la formule :

$$R_2N^{\oplus}R'_2(R''O)_p(HO)_{2-p}PO_2^{\ominus}$$

dans laquelle :

R est un groupe alcoyle en $C_6$-$C_{18}$
R' est un groupe alcoyle en $C_1$ à $C_2$
R" est un groupe alcoyle en $C_1$ à $C_{18}$
p est une valeur comprise entre 1 et 2,

cette composition étant préparée par mélange, dans ledit chlorofluorocarbure, d'un chlorure d'ammonium quaternaire

$$R_2N^{\oplus}\ R'_2Cl^{\ominus}$$

d'un acide alcoylphosphorique

$$(R''O)_p(HO)_{2-p}PO_2H$$

et d'une amine, caractérisée en ce que ladite amine est une amine fluorée de formule

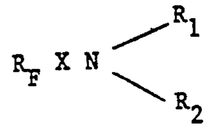

où $R_F$ représente une chaîne alcoyle perfluorée, linéaire ou ramifiée de formule $C_qF_{2q+1}$ dans laquelle q est un nombre entier compris entre 2 et 20 et où X est un groupe de liaison bivalent éventuellement partiellement halogéné et $R_1$ et $R_2$ un atome d'hydrogène, un radical alcoyle ou un radical hydroxyalcoyle, une partie au moins de cette amine fluorée étant présente sous forme de chlorhydrate soluble dans la composition.

2. Composition selon la revendication 1 caractérisée en ce que le chlorofluorocarbure est le trichloro-1,1,2-trifluoro-1,2,2-éthane.

3. Composition selon l'une des revendications 1 ou 2 caractérisée en ce que la partie cationique de l'agent tensio-actif est le cation didodécyldiméthyl ammonium ou des mélanges d'homologues contenant principalement ce cation.

4. Composition selon l'une des revendications 1 ou 2 caractérisée en ce que la partie cationique de l'agent tensio-actif est le cation dioctadécyldiméthyl ammonium ou des mélanges d'homologues contenant principalement ce cation.

5. Composition selon l'une des revendications 1 à 4 caractérisée en ce que l'acide alcoylphosphorique est un mélange des acides monobutyl et dibutylphosphorique.

6. Composition selon l'une des revendications 1 à 4 caractérisée en ce que l'acide alcoylphosphorique est un mélange des acides monooctyl et dioctylphosphorique.

7. Composition selon l'une des revendications 1 à 6 caractérisée en ce que l'amine fluorée répond à la formule :

$$R_FC_2H_4SO_2NHC_3H_6N(CH_3)_2$$

où $R_F$ a la signification décrite dans la revendication 1.

8. Composition selon l'une des revendications 1 à 6 caractérisée en ce que l'amine fluorée répond à la formule :

$$C_6F_{13}C_2H_4SO_2NHC_3H_6N(CH_3)_2$$

9. Composition selon l'une des revendications 1 à 8 caractérisée en ce qu'elle contient 0,05 à 5 g de matière tensio-active par litre de composition.

10. Utilisation des compositions selon l'une des revendications 1 à 9 pour le séchage de surfaces d'articles solides.

**Claims**

1. De-wetting composition employed for displacing liquid water, consisting of a chlorofluorocarbon which is liquid at ambient temperature, containing a surface-active agent corresponding to the formula :

$$R_2N^{\oplus}R'_2(R''O)_p(HO)_{2-p}PO_2^{\ominus}$$

in which :

R is a $C_6$-$C_{18}$-alkyl group
R' is a $C_1$ to $C_2$-alkyl group
R" is a $C_1$ to $C_{18}$-alkyl group
p is a value between 1 and 2,

this composition being prepared by mixing, in the said chlorofluorocarbon, a quaternary ammonium chloride

$$R_2N^{\oplus}R'_2Cl^{\ominus},$$

an alkylphosphoric acid

$$(R''O)_p(HO)_{2-p}PO_2H$$

and an amine, characterised in that the said amine is a fluorinated amine of formula

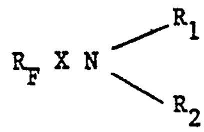

where $R_F$ denotes a straight-chain or branched perfluoroalkyl chain of formula $C_qF_{2q+1}$ in which q is an integer between 2 and 20 and where X is an optionally partly halogenated divalent connecting group and $R_1$ and $R_2$ a hydrogen atom, an alkyl radical or a hydroxyalkyl radical, at least a part of this fluorinated amine being present in the form of a hydrochloride which is soluble in the composition.

2. Composition according to Claim 1, characterised in that the chlorofluorocarbon is 1,1,2-trichloro-1,2,2-trifluoroethane.

3. Composition according to either of Claims 1 or 2, characterised in that the cationic part of the surface-active agent is the didodecyldimethylammonium cation or mixtures of homologues chiefly containing this cation.

4. Composition according to either of Claims 1 or 2, characterised in that the cationic part of the surface-active agent is the dioctadecyldimethylammonium cation or mixtures of homologues chiefly containing this cation.

5. Composition according to one of Claims 1 to 4, characterised in that the alkylphosphoric acid is a mixture of monobutyl- and dibutylphosphoric acids.

6. Composition according to one of Claims 1 to 4, characterised in that the alkylphosphoric acid is a mixture of monooctyl- and dioctylphosphoric acids.

7. Composition according to one of Claims 1 to 6, characterised in that the fluorinated amine corresponds to the formula :

$$R_FC_2H_4SO_2NHC_3H_6N(CH_3)_2$$

where $R_F$ has the meaning described in Claim 1.

8. Composition according to one of Claims 1 to 6, characterised in that the fluorinated amine corresponds to the formula :

$$C_6F_{13}C_2H_4SO_2NHC_3H_6N(CH_3)_2$$

9. Composition according to one of Claims 1 to 8, characterised in that it contains 0.05 to 5 g of surface-active substance per litre of composition.

10. Use of the compositions according to one of Claims 1 to 9 to dry the surfaces of solid articles.

**Patentansprüche**

1. Zusammensetzung zur Trocknung durch Verdrängung von flüssigem Wasser, die aus einem bei Umgebungstemperatur flüssigen Chlorfluorkohlenwasserstoff besteht, der ein Tensid der Formel enthält :

$$R_2N^{\oplus}R'_2(R''O)_p(HO)_{2-p}PO_2^{\ominus}$$

in der

R eine $C_6$-$C_{18}$-Alkylgruppe,
R' eine $C_1$-$C_2$-Alkylgruppe,
R" eine $C_1$-$C_{18}$-Alkylgruppe ist und
p einen Wert zwischen 1 und 2 besitzt,

wobei diese Zusammensetzung durch Mischung eines quartären Ammoniumchlorids

$$R_2N^{\oplus}R'_2Cl^{\ominus},$$

einer Alkylphosphorsäure

$$(R''O)_p(HO)_{2-p}PO_2H$$

und eines Amins in dem genannten Chlorfluorkohlenwasserstoff hergestellt wird, dadurch gekennzeichnet, daß das genannte Amin ein fluoriertes Amin der Formel

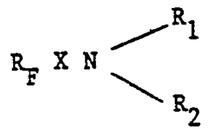

ist, in der $R_F$ eine perfluorierte, geradkettige oder verzweigte Alkylkette der Formel $C_qF_{2q+1}$ ist, wobei q eine ganze Zahl zwischen 2 und 20 bedeutet, X eine bivalente, gegebenenfalls partiell halogenierte Bindungsgruppe und $R_1$ und $R_2$ ein Wasserstoffatom, ein Alkylradikal oder ein Hydroxylalkylradikal bedeuten, und wobei wenigstens ein Teil dieses fluorierten Amins in Form des in der Zusammensetzung löslichen Chlorhydrats vorliegt.

2. Zusammensetzung nach Anspruch 1, dadurch gekennzeichnet, daß der Chlorfluorkohlenwasserstoff 1,1,2-Trichlor-1,2,2-trifluorethan ist.

3. Zusammensetzung nach Anspruch 1 oder 2, dadurch gekennzeichnet, daß der kationische Teil des Tensids das Kation-Didodecyldimethylammonium ist oder Mischungen von Homologen, die im wesentlichen dieses Kation enthalten.

4. Zusammensetzung nach Anspruch 1 oder 2, dadurch gekennzeichnet, daß der kationische Teil des Tensids das Kation-Dioctadecyldimethylammonium ist oder Mischungen von Homologen, die hauptsächlich dieses Kation enthalten.

5. Zusammensetzung nach einem der Ansprüche 1 bis 4, dadurch gekennzeichnet, daß die Alkylphosphorsäure eine Mischung von Monobutyl- und Dibutylphosphorsäure ist.

6. Zusammensetzung nach einem der Ansprüche 1 bis 4, dadurch gekennzeichnet, daß die Alkylphosphorsäure eine Mischung von Monooctyl- und Dioctylphosphorsäure ist.

7. Zusammensetzung nach einem der Ansprüche 1 bis 6, dadurch gekennzeichnet, daß das fluorierte Amin die Formel besitzt:

$$R_FC_2H_4SO_2NHC_3H_6N(CH_3)_2$$

in der $R_F$ die in Anspruch 1 angegebene Bedeutung besitzt.

8. Zusammensetzung nach einem der Ansprüche 1 bis 6, dadurch gekennzeichnet, daß das fluorierte Amin die Formel besitzt:

$$C_6F_{13}C_2H_4SO_2NHC_3H_6N(CH_3)_2$$

9. Zusammensetzung nach einem der Ansprüche 1 bis 8, daduch gekennzeichnet, daß sie 0,05 bis 5 g Tensid pro Liter der Zusammensetzung enthält.

10. Verwendung der Zusammensetzungen nach einem der Ansprüche 1 bis 9 zum Trocknen von Oberflächen von festen Gegenständen.